# EUROPÄISCHE PATENTANMELDUNG

(11) **EP 2 587 428 A1**
(43) Veröffentlichungstag der Anmeldung: **01.05.2013**
(21) Anmeldenummer: 12189713.6
(22) Anmeldetag: 24.10.2012
(51) Int. Cl.: G06Q 10/10, G06Q 50/16

(54) **Verfahren zum selektiven Ausgeben eines Angebots auf eine Anfrage und System hierfür**

(30) Priorität: 25.10.2011 DE 102011085158
(71) Anmelder: Immoace GmbH, 85748 Garching (DE)
(72) Erfinder: Leitner, Markus, 85748 Garching (DE); Goedecke, Markus, 85609 Aschheim (DE)
(74) Vertreter: HOFFMANN EITLE

(57) **Zusammenfassung**

Die vorliegende Anmeldung betrifft ein Verfahren zum selektiven Ausgeben eines Angebots auf eine Anfrage, das die folgenden Schritte umfasst: Aufnehmen mehrerer Angebote, Aufnehmen einer Anfrage, Ermitteln zumindest eines zu der Anfrage passenden Angebots und Ausgeben des zumindest einen zu der Anfrage passenden Angebots. Dabei werden die Angebote bei oder nach dem Aufnehmen mit einer Kennzeichnung versehen und das zumindest eine zu der Anfrage passende Angebot wird in Abhängigkeit von seiner Kennzeichnung auf einem ersten oder einem zweiten Weg ausgegeben.

## Beschreibung

### Technisches Gebiet

Die vorliegende Erfindung betrifft ein Verfahren zum selektiven Ausgeben eines Angebots auf eine Anfrage. Es umfasst die Schritte des Aufnehmens mehrerer Angebote, des Aufnehmens einer Anfrage, des Ermittelns zumindest eines zu der Anfrage passenden Angebots und des Ausgebens des zumindest einen zu der Anfrage passenden Angebots. Ferner betrifft die Erfindung ein System zum selektiven Ausgeben eines Angebots auf eine Anfrage. Das System umfasst eine erstes Aufnahmemodul zum Aufnehmen mehrerer Angebote, ein zweites Aufnahmemodul zum Aufnehmen einer Anfrage sowie ein erstes und ein zweites Ausgabemodul, jeweils zum Ausgeben eines zu der Anfrage passenden Angebots. Die Erfindung betrifft schließlich ein Computerprogramm zur computergestützten Ausführung des erfindungsgemäßen Verfahrens.

### Stand der Technik

Beispielsweise auf dem Gebiet der Immobilienkaufvermittlung oder auf dem Kraftfahrzeugmarkt ist es in der Vergangenheit mehr und mehr üblich geworden, zum Kauf oder zum Verkauf stehende Objekte über das Internet anzubieten. Ein Nachteil eines solchen Angebotsverhaltens ist jedoch, dass es außerhalb der Kontrolle des Anbietenden liegt, wer Zugang zu den Informationen über das bestehende Angebot hat. Insbesondere sind derartige Angebote üblicherweise öffentlich zugänglich und sind daher für jedermann einsehbar. Dieser Zustand ist jedoch für manche Anbieter unerwünscht, sodass diese Personen dazu übergegangen sind, ihre Angebote nicht mehr über das Internet, sondern auf konventionellem Weg über Makler und dergleichen anzubieten.

Für einen Makler besteht hierbei jedoch das Problem, dass auch die potentiellen Kunden mehr und mehr auf das Internet als Angebotsbörse zugreifen und nicht mehr im bisher üblichen Maße direkt auf einen Makler zugehen.

Hinzu kommt, dass mittlere und große Maklerbüros eine Vielzahl von Objekten zur Auswahl haben, die selbstverständlich durch EDV verwaltet werden sollen. Es besteht grundsätzlich das Bedürfnis seitens des Maklers, möglichst alle seine Angebote, auch die nicht zu veröffentlichenden Angebote, elektronisch zu durchsuchen. Dies führt jedoch dazu, dass der Makler sein eigenes EDV-System nicht unmittelbar mit einer Internetplattform koppeln kann, auf der die im Datenbestand vorhandenen Angebote veröffentlicht werden, ohne sich den Weisungen seiner Klienten zu widersetzen.

Um diesem Problem zu begegnen ist herkömmlich üblich, zwei getrennte Systeme zu verwenden, in denen jeweils entweder die zur Veröffentlichung freigegebenen Angebote oder die nicht zu veröffentlichenden Angebote eingepflegt sind. Ein Anfragender kann so jedoch keine Angebote erhalten, die auf dem nicht veröffentlichten System verwaltet werden, wenn er nicht zufällig einen Makler direkt kontaktiert, der ein passendes Objekt anbieten kann.

Dieser Zustand führt oft dazu, dass nicht veröffentlichte Angebote über einen sehr langen Zeitraum nicht vermittelt werden können, selbst wenn im Bereich der öffentlich zugänglichen Angebote entsprechende Anfragen über das Internet eingehen.

### Darstellung der Erfindung

Das der Erfindung zugrundeliegende technische Problem liegt darin, ein Verfahren und ein System bereitzustellen, mit dem es möglich ist, computergestützt sowohl aus öffentlichen als auch aus nicht öffentlichen Angeboten ein zu einer Anfrage passendes Angebot zu ermitteln. Ferner liegt das technische Problem der Erfindung darin, es einem allgemeinen Nutzer zu ermöglichen, ihm sonst unzugängliche Daten zu durchsuchen, ohne die Vertraulichkeitsvereinbarungen des zu den Daten gehörigen Maklers zu verletzen. Schließlich soll durch das erfindungsgemäße Verfahren und System die computergestützte Vermittlung eines Angebots zu einer Anfrage effizienter werden.

Diese Aufgabe wird durch ein Verfahren nach Anspruch 1 sowie ein System nach Anspruch 5 und ein Computerprogramm nach Anspruch 10 gelöst.

Bei einem erfindungsgemäßen Verfahren zum selektiven Ausgeben eines Angebots auf eine Anfrage werden die folgenden Schritte durchlaufen: Aufnehmen mehrerer Angebote, Aufnehmen einer Anfrage, Ermitteln zumindest eines zu der Anfrage passenden Angebots und Ausgeben des zumindest einen zu der Anfrage passenden Angebots. Dabei werden die Angebote während oder nach ihrer Aufnahme mit einer Kennzeichnung versehen und das zumindest eine zu der Anfrage passende Angebot wird in Abhängigkeit von seiner Kennzeichnung auf einem ersten oder einem zweiten Weg ausgegeben.

Mit anderen Worten ist es möglich, dass ein erster Nutzer, beispielsweise ein Immobilienmakler, die ihm anvertrauten Kauf- oder Verkaufangebote aufnimmt. Hierzu wird eine Anfrage eines potenziellen Vertragspartners aufgenommen. Erfindungsgemäß wird aber bei der Ausgabe des zumindest einen zu der Anfrage passenden Angebots darin unterschieden, mit welcher Kennzeichnung das Angebot versehen wurde. Beispielsweise können nicht für die Öffentlichkeit bestimmte Angebote mit der Kennzeichnung "nicht öffentlich" versehen werden, während der Öffentlichkeit zugängliche Angebote als "öffentlich" gekennzeichnet werden können. Alternativ ist es jedoch auch möglich, nur die öffentlichen oder nur die nicht öffentlichen Angebote zu markieren, sodass die Kennzeichnung in dem Vorhandensein oder dem Fehlen einer Markierung liegt.

Im Zusammenhang mit der vorliegenden Erfindung ist unter einer "Anfrage" die Frage nach einem Merkmal oder einer Merkmalskombination zu verstehen, die das hinter dem Angebot stehende Objekt erfüllt. Insbesondere ist die Frage nach der "Kennzeichnung" eines Angebots im Sinne der Erfindung nicht Gegenstand der Anfrage selbst. Die Anfrage ist bevorzugt mit Kontaktdaten verbunden, die es ermöglichen, den Anfragenden zu kontaktieren.

Ein erster Weg, das zu der Anfrage passende Angebot auszugeben, kann eine unmittelbare Rückmeldung an den Anfragenden sein. Beispielsweise kann dem Anfragenden, wie bei bereits bekannten Internetseiten, sofort eine Liste von zu einer bestimmten Suchanfrage passenden Angeboten angezeigt werden. In dieser Liste dürfen jedoch nur diejenigen Angebote auftauchen, die öffentlich zugänglich sein sollen. Die nicht öffentlich zugänglichen Angebote dürfen auf dieser Liste nicht aufgeführt werden.

Als erfindungsgemäßer zweiter Weg, das zu der Anfrage passende Angebot auszugeben, kann eine Mitteilung an den das Angebot verwaltenden Makler sein. Mit dieser Mitteilung kann der Makler darauf hingewiesen werden, dass es eine Anfrage zu diesem nicht öffentlichen Angebot gibt und von wem diese Anfrage gestellt wurde. Somit kann der Makler von sich aus auf den Anfragenden zugehen und ihn über das nicht öffentlich zugängliche Angebot informieren. Daneben ist es jedoch auch möglich, dass der zweite Weg eine Filterung von Angebotsdaten durchläuft und beispielsweise nur die Kontaktdaten des das Angebot verwaltenden Maklers an den Anfragenden übermittelt. Darauf kann dann der Anfragende mit dem Makler in Kontakt treten und muss seine eigenen Kontaktdaten nicht eingeben.

Dies bedeutet, dass in Abhängigkeit von der Kennzeichnung, mit der die Angebote versehen wurden, beispielsweise die zu der Anfrage passenden, öffentlich zugänglichen Angebote unmittelbar angezeigt werden (erster Weg) und die zu der Anfrage passenden, der Öffentlichkeit nicht zugänglichen Angebote dem Makler mit Hinweis auf die eingegangene Anfrage und die Person, welche die Anfrage gestellt hat, mitgeteilt werden oder hierzu keine oder nur ausgewählte Angebotsdaten und zusätzlich die Kontaktdaten des Maklers unmittelbar angezeigt werden (zweiter Weg).

Mit Vorteil ist der erste Weg auf eine erste definierte Gruppe von Personen gerichtet und der zweite Weg auf eine zweite definierte Gruppe von Personen gerichtet. Dabei umfasst die zweite Gruppe eine unbestimmbare Anzahl von Personen und die erste Gruppe umfasst bevorzugt eine bestimmbare Anzahl von Personen. Mit anderen Worten kann es sich bei der ersten Gruppe um einen oder mehrere Makler handeln, die besonders dafür qualifiziert sind, nicht öffentlich zugängliche Angebote kennen zu dürfen, während es sich bei der zweiten Gruppe typischerweise um die Öffentlichkeit handeln kann.

In einem alternativen bevorzugten Verfahren sind der erste und der zweite Weg auf eine gemeinsame definierte Gruppe von Personen gerichtet und auf dem zweiten Weg werden weniger Informationen zu dem zu der Anfrage passenden Angebot ausgegeben als auf dem ersten Weg. Dies bedeutet, dass beispielsweise in einer einzigen Ergebnisliste sowohl zu der Anfrage passende Angebote unmittelbar angezeigt werden, die entsprechend gekennzeichnet sind, als auch Kontaktdaten von einem Makler, der ein nicht angezeigtes Angebot anbieten kann.

Ein erfindungsgemäßes System zur selektiven Ausgabe eines Angebots auf eine Anfrage umfasst ein erstes Aufnahmemodul zum Aufnehmen mehrerer Angebote, ein zweites Aufnahmemodul zum Aufnehmen einer Anfrage und ein erstes und zweites Ausgabemodul, jeweils zum Ausgeben eines zu der Anfrage passenden Angebots. Dabei können die Angebote mit einer Kennzeichnung versehen werden und das System umfasst ferner ein Steuerungsmodul, das dazu ausgestaltet ist, in Abhängigkeit von der Kennzeichnung des Angebots das erstes Ausgabemodul oder das zweite Ausgabemodul zum Ausgeben des zu der Anfrage passenden Angebots zu veranlassen. Bei dem Aufnahmemodul kann es sich insbesondere um eine Eingabemaske eines Internetportals handeln, über die mehrere Angebote aufgenommen und mit der Kennzeichnung versehen werden können. Das zweite Aufnahmemodul zum Aufnehmen einer Anfrage kann insbesondere ein Web-Interface sein, d.h. eine Internetseite, über die ein beliebiger Internetnutzer eine Anfrage nach einem Angebot aufgeben kann. Bei dem ersten Ausgabemodul kann es sich um ein Modul zur Erzeugung eines Bildschirmbildes handeln, auf dem eine Liste von zu der Anfrage passenden Angeboten aufgeführt ist. Dies kann typischerweise eine öffentlich zugängliche Liste sein, insbesondere die unmittelbare Darstellung eines Suchergebnisses auf eine öffentliche Anfrage.

Bei dem zweiten Ausgabemodul kann es sich beispielsweise um ein Modul zur Erzeugung einer Benachrichtigung handeln, mit welcher der zu dem passenden Angebot gehörige Makler auf die getätigte Anfrage und den Anfragenden aufmerksam gemacht wird und somit seinerseits die Möglichkeit hat, den Anfragenden zu kontaktieren und auf das nicht öffentlich zugängliche Angebot hinzuweisen. Daneben kann das zweite Ausgabemodul auch einen Filter aufweisen, der bestimmte Angebotsdaten herausfiltert und nur wenige Angebotsdaten oder keine Angebotsdaten, dafür aber beispielsweise Kontaktdaten des zu dem Angebot gehörigen Maklers durchlässt und ausgibt.

Das Steuerungsmodul kann beispielsweise durch ein Computerprogramm realisiert werden, das nach oder während der Ermittlung eines zu der Anfrage passenden Angebots prüft, ob dieses Angebot öffentlich zugänglich ist oder nicht. Sofern das Angebot öffentlich zugänglich ist, kann es beispielsweise auf der Ergebnisdarstellung des ersten Ausgabemoduls auftauchen und dem Anfragenden damit unmittelbar mitgeteilt werden. Falls es nicht öffentlich ist, kann eine Benachrichtigung durch das zweite Ausgabemodul an den zu dem betreffenden Angebot gehörigen Makler erzeugt werden.

Mit Vorteil umfasst das System ferner ein Speichermodul, um die eingegebenen Angebote und/oder die zumindest eine Anfrage zu speichern. Mit dem erfindungsgemäßen Verfahren ist es leicht möglich, sowohl öffentlich zugängliche als auch öffentlich nicht zugängliche Angebote in ein und demselben Speichermodul unterzubringen. Durch die Kennzeichnung der Angebote wird sichergestellt, dass diese gemäß ihrer Bestimmung verwendet werden, sodass es nicht mehr nötig ist, eine physikalische oder virtuelle Trennung des Speichers für die verschieden klassifizierten Angebote vorzunehmen. Auf diese Weise ist es möglich, Speicherplatz einzusparen, den vorhandenen Speicherplatz effizienter zu nutzen und den Speicherplatz effizienter zu verwalten.

Mit Vorteil ist das zweite Aufnahmemodul derart ausgestaltet, dass es Eingaben über ein Netzwerk, insbesondere über das Internet, aufnehmen kann. Somit ist es möglich, durch das zweite Aufnahmemodul von jedem Ort mit Internetzugang aus die Gesamtheit der in das System aufgenommenen Angebote zu durchsuchen, unabhängig davon, ob die Angebote dem Anfragenden unmittelbar zugänglich sein sollen oder nicht. Dadurch entfällt die Notwendigkeit, separat mehrere Makler mit der eigenen Anfrage vertraut zu machen, um möglicherweise nicht öffentlich zugängliche Angebote ebenfalls abzudecken. Dadurch wird die Vermittlung von Angeboten wesentlich effizienter.

Ein erfindungsgemäßes Computerprogramm veranlasst einen Computer dazu, wenn es auf diesem ausgeführt wird, das erfindungsgemäße Verfahren auszuführen.

### Beispiele

Nachfolgend soll ein Beispiel eines bevorzugten Systems zum selektiven Ausgeben eines Angebots auf eine Anfrage beschrieben werden, das ein bevorzugtes Computerprogramm zur Ausführung des erfindungsgemäßen Verfahrens darstellt.

Das bevorzugte System umfasst ein Portal, über das beispielsweise ein Immobilienmakler seine Objekte in eine Datenbank einpflegen kann. Somit werden mehrere Angebote durch das System aufgenommen. Dies geschieht beispielsweise über ein einfaches Formular, in das Texte, Bilder und Dokumente eingetragen werden. Die Texte werden in einer Datenbank gespeichert und die Bilder und Dokumente auf einem Server abgelegt. Gleichzeitig kann beispielsweise aus den Informationen ein Exposé generiert und auf dem Server gespeichert werden.

Während der Aufnahme der Angebote ist es möglich, dass der Makler das jeweils eingegebene Angebot damit kennzeichnet, ob es auf einer globalen Webseite, einer individuellen Webseite oder gar nicht veröffentlicht werden soll. Unabhängig von der Kennzeichnung wird das Objekt im Sinne eines Angebots jedoch in derselben Datenbank und auf demselben Server gespeichert. Es kann daher vom System auch als zu einer Anfrage passend ermittelt werden, selbst wenn es in Abhängigkeit der Kennzeichnung des Angebots dem Anfragenden nicht unmittelbar angezeigt werden soll.

Ein oder mehrere als öffentlich zugänglich gekennzeichnete Objektangebote können in einer Ergebnisliste oder ähnlichen Darstellung direkt auf die Anfrage hin angezeigt werden.

Falls ein als nicht veröffentlicht gekennzeichnetes Objekt zu einer gestellten Anfrage passt, wird von dem beschriebenen Computersystem ein Kontakt zu dem Makler hergestellt, der das gesuchte Objekt in seinem Bestand hat. Hierbei werden Daten des Anfragenden, die dieser beispielsweise im Rahmen einer Registrierung oder dergleichen selbst eingeben kann, an den Makler weitergeleitet und der Makler kann von sich aus auf den Anfragenden zugehen, um das nicht öffentliche Angebot, das zu der öffentlich eingestellten Anfrage passt, abzugeben. Auf diese Weise kann eine Vermittlung auch dann erfolgen, wenn sich Anfragender und Anbieter nicht kennen und bisher nichts voneinander wussten.

In einem alternativen Beispiel wird dann, wenn ein als nicht veröffentlicht gekennzeichnetes Objekt zu der gestellten Anfrage passt, von dem beschriebenen Computersystem unmittelbar an den Anfragenden eine Mitteilung abgegeben, aus welcher der Anfragende die Kontaktdaten des Maklers ersehen kann. Dazu wird bevorzugt der Hinweis an den Anfragenden gegeben, dass dieser Makler ein Objekt vermitteln kann, das zu der gestellten Anfrage passt. Somit ist es dem Anfragenden möglich, auch direkt mit dem Makler in Kontakt zu treten, um dem der Öffentlichkeit nicht zugänglichen Objektangebot nachzugehen. Diese alternative Ausgestaltung des Systems erfordert es nicht, dass der Anfragende vollständige Kontaktdaten angibt. Wenn er den Maklerkontakt per E-Mail oder SMS erhält, genügt eine funktionierende E-Mail Adresse oder Telefonnummer.

Daneben können die Kontaktdaten des Maklers auch direkt in der Ergebnisliste zusammen mit den öffentlich zugänglichen Objekten angezeigt werden. In diesem Fall liegt der Unterschied zwischen dem ersten und dem zweiten Weg im Sinne der beanspruchten Erfindung darin, dass das der Öffentlichkeit nicht zugängliche Angebot durch einen Filter läuft, der die Objektdaten herausfiltert und nur die Kontaktdaten des Maklers weitergibt.

Das erfindungsgemäße Verfahren, System und Computerprogramm lässt sich selbstverständlich auch auf andere Bereiche anwenden als auf die Vermittlung von Angeboten und Anfragen auf dem Gebiet der Immobilien- oder Kraftfahrzeugvermittlung. Es ist auch möglich, das System dezentral auszugestalten, indem beispielsweise mehrere Komponenten des Computerprogramms bestehen, die teilweise auf Computern von Endnutzern und teilweise auf einem oder mehreren Servercomputern installiert sind und dort betrieben werden. Auf diese Weise ist es möglich, eine effiziente Ausnutzung der zur Verfügung stehenden Ressourcen zu gewährleisten und gleichzeitig die Vorteile einer zentralen und einzigen Datenbank zu nutzen, in der alle zur Verfügung stehenden Angebote gespeichert werden können, um den Suchprozess und die Ermittlung von zu einer Anfrage passenden Angeboten besonders effizient zu gestalten.

## Patentansprüche

1. Verfahren zum selektiven Ausgeben eines Angebots auf eine Anfrage, umfassend die folgenden Schritte:
Aufnehmen mehrerer Angebote,
Aufnehmen einer Anfrage,
Ermitteln zumindest eines zu der Anfrage passenden Angebots und
Ausgeben des zumindest einen zu der Anfrage passenden Angebots,
wobei die Angebote mit einer Kennzeichnung versehen werden und
wobei das zumindest eine zu der Anfrage passende Angebot in Abhängigkeit von seiner Kennzeichnung auf einem ersten oder einem zweiten Weg ausgegeben wird.

2. Verfahren nach Anspruch 1, wobei der erste Weg auf eine erste definierte Gruppe von Personen gerichtet ist und der zweite Weg auf eine zweite definierte Gruppe von Personen gerichtet ist, wobei die zweite Gruppe eine unbestimmbare Anzahl an Person umfasst und die erste Gruppe eine bestimmbare Anzahl an Personen umfasst.

3. Verfahren nach Anspruch 1, wobei der erste und der zweite Weg auf eine gemeinsame definierte Gruppe von Personen gerichtet sind.

4. Verfahren nach einem der vorhergehenden Ansprüche, wobei auf dem zweiten Weg weniger Informationen zu dem zu der Anfrage passenden Angebot ausgegeben werden als auf dem ersten Weg.

5. System zur selektiven Ausgabe eines Angebots auf eine Anfrage, umfassend
ein erstes Aufnahmemodul zum Aufnehmen mehrerer Angebote,
ein zweites Aufnahmemodul zum Aufnehmen einer Anfrage,
ein erstes Ausgabemodul und ein zweites Ausgabemodul jeweils zum Ausgeben eines zu der Anfrage passenden Angebots,
wobei die Angebote mit einer Kennzeichnung versehen werden können, und ferner umfassend
ein Steuerungsmodul, das dazu ausgestaltet ist, in Abhängigkeit von der Kennzeichnung des Angebots das erste Ausgabemodul oder das zweite Ausgabemodul zum Ausgeben des zu der Anfrage passenden Angebots zu veranlassen.

6. System nach Anspruch 5, wobei das erste Ausgabemodul und das zweite Ausgabemodul dazu ausgestaltet sind, das zu der Anfrage passende Angebot jeweils für eine definierte erste oder zweite Gruppe von Benutzern auszugeben.

7. System nach Anspruch 5, wobei das erste und das zweite Ausgabemodul dazu ausgestaltet sind, das zu der Anfrage passende Angebot für eine gemeinsame definierte Gruppe von Benutzern auszugeben.

8. System nach einem der Ansprüche 5 bis 7, wobei das zweite Ausgabemodul dazu ausgestaltet ist, weniger Informationen zu dem zu der Anfrage passenden Angebot auszugeben als das erste Ausgabemodul.

9. System nach einem der Ansprüche 5 bis 8, ferner umfassend ein Speichermodul, um die eingegebenen Angebote und/oder die zumindest eine Anfrage zu speichern.

10. Computerprogramm, das, wenn es auf einem Computer ausgeführt wird, diesen dazu veranlasst ein Verfahren nach einem der Ansprüche 1 bis 4 auszuführen.
